# EUROPÄISCHE PATENTSCHRIFT

(11) **EP 2 873 511 B1**
(45) Veröffentlichungstag und Bekanntmachung des Hinweises auf die Patenterteilung: **04.04.2018**
(21) Anmeldenummer: 13192927.5
(22) Anmeldetag: 14.11.2013
(51) Int. Cl.: B29C 53/36

(54) **Vorrichtung und Verfahren zum Umbugen**
Method and device for edgefolding
Dispositif et procédé de rembordement

(43) Veröffentlichungstag der Anmeldung: 20.05.2015
(73) Patentinhaber: Dr. Stoffel, Kai Konstantin, 6020 Innsbruck (AT)
(72) Erfinder: Stoffel, Kai Konstantin, Dr., 6020 Innsbruck (AT); Peimpolt, Markus, 6020 Innsbruck (AT)
(74) Vertreter: Wunderlich & Heim Patentanwälte Partnerschaftsgesellschaft mbB

(56) Entgegenhaltungen:
- WO-A1-99/43518
- US-A1- 2011 274 921

## Beschreibung

Die Erfindung betrifft eine Vorrichtung zum Umbugen einer überstehenden flexiblen Dekorschicht an einem Werkstück, mit einer Halterung zum Aufnehmen und Halten des Werkstückes und ein oder mehreren Umbugselementen zum Umlegen der überstehenden Dekorschicht und Anlegen an das Werkstück, gemäß dem Oberbegriff des Anspruchs 1.

Die Erfindung betrifft des Weiteren ein Verfahren zum Umbugen einer überstehenden flexiblen Dekorschicht an einem Werkstück, wobei das Werkstück mit einer Halterung aufgenommen und gehalten wird und mittels ein oder mehrerer Umbugstempel die überstehende Dekorschicht umgelegt und an das Werkstück angelegt wird, gemäß dem Oberbegriff des Anspruchs 8.

Umbugvorrichtungen werden insbesondere zur Endbearbeitung von Werkstücken eingesetzt, welche durch ein sogenanntes Hinterspritzen hergestellt sind. Dabei wird eine Dekorschicht, welche ein Textil, eine Folie, ein Papier etc. sein kann, in eine Spritzgießform eines Kunststoffwerkstückes eingelegt, so dass die Dekorschicht beim Spritzgießen integriert mit dem Werkstück verbunden wird. Bei diesem Hinterspritzen lässt sich ein gewisses seitliches Überstehen der flexiblen Dekorschicht gegenüber dem Werkstück nicht vermeiden oder wird sogar gewünscht. Beim Umbugen dieser überstehenden Dekorschicht wird diese nicht, wie häufig üblich, durch Abtrennen entfernt, sondern auf eine Rückseite des Werkstückes umgelegt und an die Werkstückrückseite angelegt. Damit erstreckt sich die Dekorschicht auch über einen Kantenbereich des Werkstückes hinaus, was insbesondere für Werkstücke mit höherer Wertanmutung gewünscht ist, wie sie etwa im Innenausbau eines Kraftfahrzeuges verlangt sind.

Die US 2011/274921 A1 beschreibt eine gattungsgemäße Vorrichtung und ein gattungsgemäßes Verfahren zum Umbugen einer überstehenden flexiblen Dekorschicht an einem Werkstück mit Werkstücköffnung. Bei diesem bekannten Verfahren wird das Werkstück auf eine Halterung aufgelegt und mittels einer ringförmigen Niederhalterplatte angedrückt. Das Umbugen der überstehenden Dekorschicht am Werkstückinnenrand erfolgt mittels Umbugstempeln, welche über vertikal gerichtete Stellzylinder verfahrbar sind. Über eine L-förmige Kulissensteuerung wird die lineare Hubbewegung des Stellzylinders in eine Umkantbewegung zum Umbugen der Dekorschicht übersetzt. Bei einer Formänderung des Produktes ist die mechanische Kulissensteuerung aufwändig umzuarbeiten oder zu ersetzen.

Die WO 99/43518 A1 offenbart ebenfalls einen gattungsgemäßen Stand der Technik. Zum Umbugen einer Dekorschicht an einem Innenrand wird das Werkstück auf eine Halterung aufgelegt. Das Umbugen der überstehenden Dekorschicht erfolgt über paarweise zusammenarbeitende Umbugstempel, welche in vertikaler und horizontaler Richtung zueinander verstellbar sind. Die Bewegung der Umbugstempel erfolgt mittels eine Vielzahl von Stellzylindern, welche um das Werkstück verteilt angeordnet sind. Aufgrund des Platzbedarfes der Vielzahl von Stellzylindern ist die Anpassbarkeit der Anordnung an Formänderungen des Produktes begrenzt.

Das Umbugen wird üblicherweise auf einer Presse unter Verwendung von Keilschiebermechanismen durchgeführt, welche die Hubbewegung der Presse teilweise in eine seitliche Umlegbewegung umsetzen. Derartige Vorrichtungen gehen beispielsweise aus der DE 196 07 855 C1, der DE 20 2005 021 368 U1 oder der DE 10 2009 025 539 A1 hervor.

Derartige Umbugvorrichtungen mit Keilschiebermechanismen sind jedoch mechanisch sehr aufwändig und benötigen auch einen entsprechenden Bauraum. Sofern ein Umbugen entlang einer inneren Werkstücköffnung durchgeführt werden soll, sind derartige Werkzeuge aufgrund des notwendigen Bauraumes nur begrenzt oder überhaupt nicht einsetzbar.

Aus der DE 101 36 325 A1 ist eine Vorrichtung zum Umbugen von Lochrändern in einem Formteil bekannt. Für dieses Umbugen wird ebenfalls eine Vorrichtung mit einer Hubbewegung eingesetzt. Dabei ist das Werkstück mit der Werkstücköffnung um einen zentralen Kolben angeordnet, welcher ein konisches Formende aufweist. An diesem konischen Formende ist mittels eines becherförmigen Körpers ein Gummiring gehaltert, welcher durch eine Verschiebbewegung entlang der konischen Formfläche des Kolbens die überstehende Dekorschicht entlang des Lochrandes umbugen kann. Allerdings kann diese bekannte Vorrichtung nur ein Umbugen von relativ geringfügig überstehenden Dekorschichten durchführen. Zudem ist der zum Umbugen benötigte Gummiring einem erheblichen Verschleiß ausgesetzt, so dass entsprechend häufige Wartungsarbeiten notwendig sind.

Der Erfindung liegt die Aufgabe zugrunde, eine Vorrichtung und ein Verfahren zum Umbugen anzugeben, mit welchem ein Umbugen entlang von Werkstücken effizient durchführbar ist.

Die Aufgabe wird zum einen durch eine Vorrichtung mit den Merkmalen des Anspruchs 1 und zum anderen mit einem Verfahren mit den Merkmalen des Anspruchs 8 gelöst. Bevorzugte Ausführungsformen der Erfindung sind in den jeweils abhängigen Ansprüchen angegeben.

Bei der erfindungsgemäßen Vorrichtung ist unter anderem vorgesehen, dass die Halterung zum Aufnehmen eines Werkstückes mit einer Werkstücköffnung einen Durchgang aufweist, welcher korrespondierend zu der Werkstücköffnung des aufgenommenen Werkstückes angeordnet ist, dass die Umbugstempel im Bereich des Durchganges angeordnet sind und zwischen einer Rückzugsposition, in welcher die Umbugstempel radial innerhalb eines Umfanges der Werkstücköffnung angeordnet sind, und einer Umbugposition verstellbar sind, in welcher die Umbugstempel radial über die Werkstücköffnung hinausragen, und dass zum Umbugen die Halterung mit dem Werkstück relativ zu den Umbugstempeln in einer Hubrichtung verfahrbar ist.

Ein Grundgedanke der Erfindung liegt darin, eine Vielzahl von Umbugstempeln entlang des Werkstückrandes anzuordnen, welche horizontal oder in Richtung einer Werkstückebene zwischen einer Rückzugsposition und einer Umbugposition verstellbar gelagert und angetrieben sind. Diese seitliche Stellbewegung ist dabei unabhängig von der im Wesentlichen senkrecht dazu angeordneten Hubbewegung oder Hubrichtung. Es kann so eine sehr flexible Anpassung der Umbugvorrichtung an unterschiedliche Werkstückrandkonturen erfolgen, an denen ein Umbugen ausgeführt werden soll.

Insbesondere wird es auf diese Weise ermöglicht, auch an Werkstücköffnungen die Umbugvorrichtung besonders kompakt auszubilden. Die Trennung der Hubbewegung von der Verstellbewegung der Umbugstempel von einer Rückzugsposition in eine Umbugposition erlaubt auch eine erhebliche Vereinfachung des gesamten Aufbaus der Umbugvorrichtung gegenüber herkömmlich bekannten Pressen.

Die erfindungsgemäße Umbugvorrichtung mit den Umbugstempeln kann dabei nicht nur entlang der Kontur einer Werkstücköffnung, sondern auch entlang der äußeren Randkontur des Werkstückes eingesetzt werden.

Grundsätzlich kann eine Vielzahl von Umbugstempeln entlang allen freien Randkanten des Werkstückes oder nur entlang nur eines Teiles hiervon angeordnet sein. Die Erfindung lässt sich auf sämtliche denkbaren Artikelgeometrien anwenden, unabhängig davon, ob diese eine innenliegende Öffnung aufweist oder nicht. Besonders bevorzugt ist es nach der Erfindung, dass die Umbugstempel entlang des Umfanges der Werkstücköffnung angeordnet sind. Die Umbugstempel bilden hierbei eine kompakte Ringstruktur und können sternförmig von der Rückzugsposition in die Umbugposition radial nach außen ausgefahren werden.

Eine weitere bevorzugte Ausführungsform der Erfindung besteht darin, dass einzelnen Umbugstempeln jeweils ein Stellzylinder zugeordnet ist und die Umbugstempel einzeln verstellbar sind. Es können aber auch mehrere Umbugstempel zu einer Stempeleinheit zusammengefasst sein, welche dann über einen zugeordneten Stellzylinder verfahrbar sind. Die Betätigung der Umbugstempel über individuell zugeordnete Stellzylinder erlaubt auch eine einfache Anpassung an Werkstückänderungen. Es können an unterschiedlichen Seiten des Werkstückes auch Umbugvorgänge mit unterschiedlichem Stellweg vorgenommen werden. Als Stellzylinder können Hydraulikzylinder oder vorzugsweise Pneumatikzylinder eingesetzt werden. Grundsätzlich sind aber auch andere Stellelemente, etwa mit einem Linearmotor, möglich.

Eine besonders kompakte Anordnung wird nach einer Ausführungsform der Erfindung dadurch erreicht, dass die Stellzylinder unterhalb der Halterung angeordnet sind, wobei die Stellzylinder mit den zugeordneten Umbugstempeln jeweils über ein Verbindungsglied verbunden sind, welche sich nach oben durch den Durchgang in der Halterung erstrecken. Die Stellzylinder sind also unterhalb einer üblicherweise plattenförmig ausgebildeten Halterung positioniert. Es kann so auch ein Einsatz zum Umbugen an relativ kleinen Werkstücköffnungen oder Werkstückdurchbrüchen vorgesehen werden.

Eine weitere Vereinfachung der Vorrichtung wird nach einer bevorzugten Ausführungsvariante der Erfindung dadurch erreicht, dass die Stellzylinder auf einer Grundplatte angeordnet sind, welche relativ zu der Halterung mittels einer Hubzylinderanordnung in der Hubrichtung verfahrbar ist. Somit wird auch die Hubbewegung mittels einer kompakten Hubzylinderanordnung, welche mindestens einen Hubzylinder aufweist, bewirkt. Die Hubzylinder können pneumatisch oder hydraulisch betrieben sein. Üblicherweise werden zum Umbugen zunächst die Umbugstempel von der Rückzugsposition in die Umbugposition verfahren, während anschließend oder auch gleichzeitig das Verfahren der Halterung oder der Grundplatte mit den Hubzylindern und den Umbugstempeln in Hubrichtung erfolgt. Hierdurch kann die überstehende Dekorschicht zunächst auf die Rückseite des Werkstückes umgelegt und daran angedrückt werden.

Zur Befestigung der umgebugten Dekorschicht ist es nach einer Ausführungsvariante der Erfindung vorgesehen, dass mindestens ein Umbugstempel eine Heizeinrichtung, insbesondere eine elektrische Heizpatrone, aufweist. Durch ein Beheizen des Umbugstempels kann ein Anschmelzen des Werkstückes aus einem Kunststoffmaterial erfolgen, so dass die umgebugte Dekorschicht mit dem Werkstück verschweißt und somit zuverlässig fixiert ist. Die Heizeinrichtung kann eine Heizpatrone mit einer Heizleiterwicklung oder eine andere Heizeinheit sein, beispielsweise eine Ultraschall-Sonotrode, bei welcher die Heizenergie mittels Ultraschall eingebracht wird.

Es kann aber auch ein Heißverkleben erfolgen, wobei etwa die Dekorschicht vorab mit einer Heißklebeschicht versehen wurde, welche durch den beheizten Umbugstempel aktiviert wird.

Eine weitere bevorzugte Ausführungsform der Erfindung besteht darin, dass zwischen dem Umbugstempel und dem Verbindungsglied ein Isolationselement zur thermischen Isolierung vorgesehen ist. Besonders bei der Verwendung einer Heizeinrichtung wird so sichergestellt, dass allein der Umbugstempel auf die gewünschte hohe Heiztemperatur aufgeheizt wird, während das Verbindungsglied und der sich daran befindliche Stellzylinder weiter eine relativ niedrige Temperatur aufweisen.

Zum Kontrollieren der Temperatur ist es nach einer weiteren Ausführungsform der Erfindung vorteilhaft, dass das Verbindungsglied und/oder der Umbugstempel mit Kühlkanälen versehen sind und dass aus dem Stellzylinder ausströmendes Druckfluid als Kühlmedium durch die Kühlkanäle leitbar ist. Als Druckfluid kann insbesondere Druckluft verwendet werden, welche aus Pneumatikstellzylindern austritt. Dieses austretende Druckfluid kann zur Kühlung des Verbindungsgliedes oder der Umbugstempel eingesetzt werden, indem das Druckfluid durch darin vorgesehene Kühlkanäle zum Abtransport von Wärme geleitet wird.

Die Erfindung umfasst auch eine Fertigungsanlage mit einer Spritzgießvorrichtung zum Hinterspritzen und Herstellen eines Werkstückes mit mindestens einer Werkstücköffnung und einer flexiblen Dekorschicht, welche entlang der Öffnung übersteht, welche dadurch gekennzeichnet ist, dass die vorbeschriebene Vorrichtung zum Umbugen in der Fertigungsanlage vorgesehen ist. Insbesondere schließt sich die Vorrichtung zum Umbugen unmittelbar an die grundsätzlich bekannte Spritzgießvorrichtung zum Hinterspritzen des Werkstückes mit der Dekorschicht an.

Die eingangs genannte Aufgabe wird weiter durch ein Verfahren zum Umbugen gelöst, welches dadurch gekennzeichnet ist, dass ein Werkstück mit einer Werkstücköffnung vorgesehen wird, wobei das Werkstück mit einer Halterung mit einem Durchgang aufgenommen wird, welcher zu der Werkstücköffnung korrespondierend angeordnet ist, dass die Umbugstempel im Bereich des Durchganges angeordnet sind und zwischen einer Rückzugsposition, in welcher die Umbugstempel radial innerhalb eines Umfanges der Werkstücköffnung angeordnet sind, und einer Umbugposition verstellt werden, in welcher die Umbugstempel radial über die Werkstücköffnung hinausragen, und dass zum Umbugen die Halterung mit dem Werkstück relativ zu den Umbugstempeln in einer Hubrichtung verfahren wird. Die Vorrichtung wird insbesondere mit einer Vorrichtung zum Umbugen ausgeführt, wie sie zuvor beschrieben worden ist. Mit dem erfindungsgemäßen Verfahren zum Umbugen können die vorgeschriebenen Vorteile beim Umbugen erzielt werden.

Eine hohe Flexibiltät wird nach einer Ausführungsvariante der Erfindung dadurch erreicht, dass die Umbugstempel einzeln mittels Stellzylinder verstellt werden, welche von einer Steuereinheit gesteuert werden. Die Steuereinheit kann ein Computer oder eine SPS-Steuerung sein.

Weiterhin ist es nach einer Ausführungsform der Erfindung bevorzugt, dass mindestens ein Umbugstempel beheizt wird, wobei beim Umbugen die überstehende Dekorschicht an dem Werkstück heißverklebt oder angeschweißt wird. Insbesondere bei einem Werkstück aus einem Kunststoffmaterial kann so der Kunststoff teilweise aufgeschmolzen und die Dekorschicht daran angeschweißt oder materialschlüssig damit verbunden werden.

Ein besonders guter Schutz gegen eine Überhitzung wird nach einer weiteren Verfahrensvariante dadurch erzielt, dass ein Verbindungsglied zwischen dem Stellzylinder und dem Umbugstempel und/oder der Umbugstempel mittels eines Kühlmediums gekühlt wird, welches durch Kühlkanäle in dem Verbindungsglied und/oder dem Umbugstempel geleitet wird. In besonders wirtschaftlicher Weise kann entspannte Druckluft eingesetzt werden, welche bei Betätigung der Stellzylinder als Abluft anfällt. Dabei ist es besonders vorteilhaft, dass aufgrund der Expansion der Druckluft eine Temperaturherabsetzung des Kühlmediums erfolgt, so dass dieses besonders gut zur Aufnahme von Wärme aus den Umbugstempeln oder den Verbindungsgliedern geeignet ist.

Die Erfindung wird nachfolgend anhand eines bevorzugten Ausführungsbeispieles weiter beschrieben, welches schematisch in den beigefügten Zeichnungen dargestellt ist. In den Zeichnungen zeigen:
- Fig. 1:: eine Draufsicht auf eine erfindungsgemäße Vorrichtung zum Umbugen;
- Fig. 2:: eine Querschnittsansicht gemäß dem Schnitt A-A durch die Vorrichtung von Fig. 1 in einer vergrößerten Darstellung; und
- Fig. 3:: eine perspektivische Detailansicht eines Umbugstempels mit Stellzylinder aus der Vorrichtung von Fig. 1.

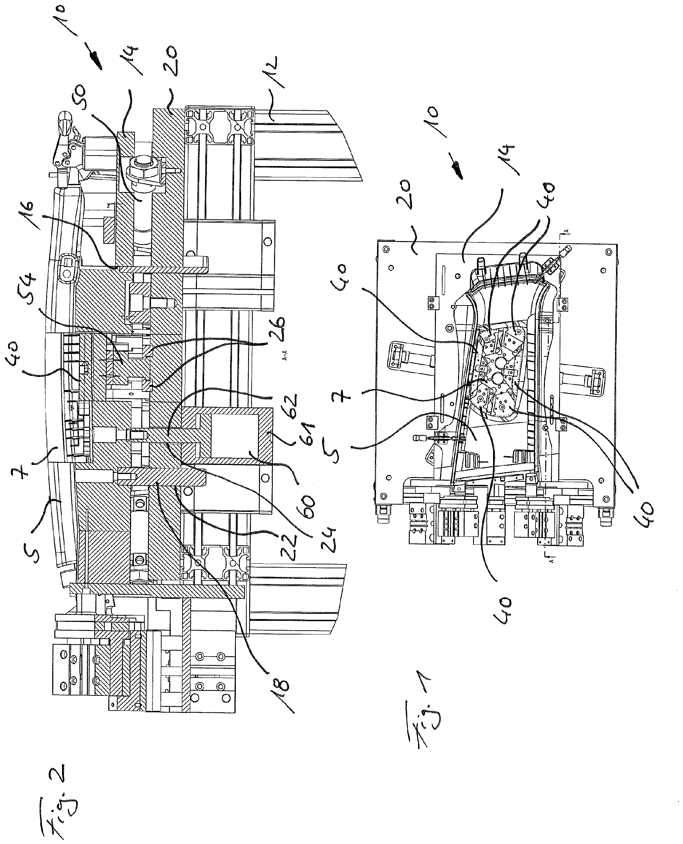

Eine erfindungsgemäße Vorrichtung 10 zum Umbugen gemäß den Figuren 1 und 2 weist ein tischförmiges Grundgestell 12 auf, an dessen Oberseite eine Grundplatte 20 befestigt ist. Oberhalb der Grundplatte 20 ist eine plattenförmige Halterung 14 angeordnet, welche zur Aufnahme und Halterung eines Werkstückes 5 mit einer mittigen Werkstücköffnung 7 ausgebildet ist. Das Werkstück 5 ist ein durch Hinterspritzen hergestelltes Kunststoffteil, welches an einer Vorderseite, mit welcher das Werkstück 5 auf der Halterung 14 aufliegt, eine nicht dargestellte Dekorschicht aus einem flexiblen Textilmaterial aufweist. Die flexible Dekorschicht steht an den Rändern, insbesondere der Werkstücköffnung 7 über und soll mittels der dargestellten Vorrichtung 10 auf eine Werkstückrückseite umgebugt werden.

An der Unterseite der plattenförmigen Halterung 14 sind mehrere Führungsbolzen 18 befestigt, welche sich nach unten erstrecken und passend und gleitend in Führungsbohrungen 22 in der Grundplatte 20 aufgenommen werden. Die Halterung 14 ist so gegenüber der Grundplatte 20 in Hubrichtung verschiebbar gelagert. An der Unterseite der Grundplatte 20 ist eine Zylinderanordnung 60 angebracht. Von der Hubzylinderanordnung 60 ist lediglich ein einzelner Hubzylinder 61 dargestellt. Eine Kolbenstange 62 des Hubzylinders 61 erstreckt sich nach oben durch einen Durchbruch 24 in der Grundplatte 20. Die Kolbenstange 62 ist über eine Schraubverbindung mit der Unterseite der Halterung 14 fest verbunden.

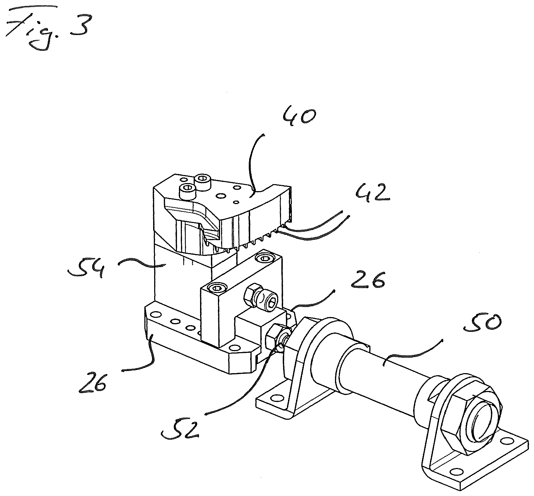

Mittels der Hubzylinderanordnung 60 kann die Halterung 14 gegenüber der Grundplatte 20 in eine vertikale Hubrichtung nach oben und unten verfahren werden. An der Oberseite der Grundplatte 20 ist über Führungsleisten 26 jeweils ein Verbindungsglied 54 zu einem Umbugstempel 40 horizontal verschiebbar gelagert. Eine horizontale Verschiebebewegung zwischen einer Rückzugsposition und einer Umbugposition wird mittels eines Stellzylinders 50 bewirkt. Die Anordnung mit dem Stellzylinder 50 wird nachfolgend im Zusammenhang mit Fig. 3 näher beschrieben.

Wie insbesondere aus der Draufsicht von Fig. 1 zu entnehmen ist, sind innerhalb des Umfanges der Werkstücköffnung 7 insgesamt sechs Umbugstempel 40 ringförmig verteilt entlang des Öffnungsrandes angeordnet.

Die Betätigung eines Umbugstempels 40 wird im Zusammenhang mit der Darstellung von Fig. 3 erläutert. Der blockförmige Umbugstempel 40 weist an seiner das Werkstück 5 beziehungsweise die Dekorschicht kontaktierenden Druckseite Prägevorsprünge 42 auf. Die Prägevorsprünge 42 dienen einem punkt- oder linienformigen An- und Einpressen der Dekorschicht an die Rückseite des Werkstückes 5. Der plattenförmige Umbugstempel 40 ist über eine Schraubbefestigung an einem L-förmigen Verbindungsglied 54 angebracht. Das Verbindungsglied 54 ist verschiebbar entlang von zwei gegenüberliegenden Führungsleisten 26 gelagert. Das Verbindungsglied 54 liegt dabei auf der in Fig. 3 nicht dargestellten Grundplatte 20 auf. Ebenfalls auf der Grundplatte 20 befestigt ist der in Fig. 3 dargestellte Stellzylinder 50, welcher als ein Pneumatikzylinder ausgebildet ist. Die Darstellung von Fig. 3 zeigt den Umbugstempel 40 in seiner radial ausgefahrenen Position, wobei der radial außenliegende Stellzylinder 50 eingefahren ist. Durch Ausfahren einer Stellzylinderstange 52, welche mit dem Verbindungsglied 54 verschraubt ist, kann das Verbindungsglied 54 und der daran angebrachte Umbugstempel 40 radial nach innen in eine Rückzugsposition rückgefahren werden, welche in Fig. 1 dargestellt ist. In dieser Rückzugsposition ist das Werkstück 5 aus der Halterung 14 entnehmbar oder darin einsetzbar.

Zur Durchführung des Umbugverfahrens nach der Erfindung werden die insgesamt sechs dargestellten Umbugstempel 40 durch ihre jeweils zugeordneten Stellzylinder 50 horizontal und radial nach außen gefahren, so dass die Umbugstempel 40 in ihrer Umbugposition über den Rand der Werkstücköffnung 7 ragen. Anschließend wird durch Ausfahren der Hubkolbenstangen 62 der Hubzylinder 61 der Hubzylinderanordnung 60 die Halterung 40 mit dem Werkstück 5 vertikal gegenüber der Grundplatte 20 nach oben gefahren. Dabei wird das Werkstück 5 und die überstehende Dekorschicht gegen die an der Grundplatte 20 angeordneten Umbugstempel 40 mit ihren Prägevorsprüngen 42 gedrückt. Auf diese Weise wird die überstehende Dekorschicht auf die Rückseite des Werkstückes 5 umgelegt und daran angepresst. Es kann in dieser Position ein Verschweißen oder Heißverkleben zur Befestigung der überstehenden Dekorschicht erfolgen.

## Patentansprüche

1. Vorrichtung zum Umbugen einer überstehenden flexiblen Dekorschicht an einem Werkstück (5), mit einer Halterung (14) zum Aufnehmen und Halten des Werkstückes (5) und ein oder mehreren Umbugstempeln (40) zum Umlegen der überstehenden Dekorschicht und Anlegen an das Werkstück (5),
wobei die Halterung (14) zum Aufnehmen und Halten eines Werkstückes (5) mit einer Werkstücköffnung (7) einen Durchgang (16) aufweist, welcher korrespondierend zu der Werkstücköffnung (7) des aufgenommenen Werkstückes (5) angeordnet ist,
die Umbugstempel (40) im Bereich des Durchganges (16) angeordnet sind und zwischen einer Rückzugsposition, in welcher die Umbugstempel (40) radial innerhalb eines Umfanges der Werkstücköffnung (7) angeordnet sind, und einer Umbugposition verstellbar sind, in welcher die Umbugstempel (40) radial über die Werkstücköffnung (7) hinausragen, und
einzelnen Umbugstempeln (40) jeweils ein Stellzylinder (50) zugeordnet ist und die Umbugstempel (40) einzeln verstellbar sind,
**dadurch gekennzeichnet,**
**dass** zum Umbugen die Halterung (14) mit dem Werkstück (5) relativ zu einer Grundplatte (20) in einer Hubrichtung verfahrbar ist,
**dass** die Stellzylinder (50) mit den Umbugstempeln (40) auf der Grundplatte (20) angeordnet sind,
**dass** die Grundplatte (20) mit den Stellzylindern (50) und den Umbugstempeln (40) relativ zu der Halterung (14) mittels einer Hubzylinderanordnung (60) in der Hubrichtung verfahrbar ist, und
**dass** die Umbugstempel (40) durch die Stellzylinder (50) in die Umbugposition in einer seitlichen Stellbewegung verstellbar sind, welche im Wesentlichen senkrecht zur Hubrichtung gerichtet ist.

2. Vorrichtung nach Anspruch 1,
**dadurch gekennzeichnet,**
**dass** die Umbugstempel (40) entlang des Umfanges der Werkstücköffnung (7) angeordnet sind.

3. Vorrichtung nach Anspruch 1 oder 2,
**dadurch gekennzeichnet,**
**dass** die Stellzylinder (50) unterhalb der Halterung (14) angeordnet sind, wobei die Stellzylinder (50) mit den zugeordneten Umbugstempeln (40) jeweils über ein Verbindungsglied (54) verbunden sind, welche sich nach oben durch den Durchgang (16) in der Halterung (14) erstrecken.

4. Vorrichtung nach einem der Ansprüche 1 bis 3,
**dadurch gekennzeichnet,**
**dass** mindestens ein Umbugstempel (40) eine Heizeinrichtung, insbesondere eine elektrische Heizpatrone aufweist.

5. Vorrichtung nach einem der Ansprüche 3 oder 4,
**dadurch gekennzeichnet,**
**dass** zwischen dem Umbugstempel (40) und dem Verbindungsglied (54) ein Isolationselement zur thermischen Isolierung vorgesehen ist.

6. Vorrichtung nach einem der Ansprüche 3 bis 5,
**dadurch gekennzeichnet,**
**dass** das Verbindungsglied (54) und/oder der Umbugstempel (40) mit Kühlkanälen versehen sind und
**dass** aus dem Stellzylinder (50) ausströmendes Druckfluid als Kühlmedium durch die Kühlkanäle leitbar ist.

7. Fertigungsanlage mit einer Spritzgießvorrichtung zum Hinterspritzen und Herstellen eines Werkstückes (5) mit mindestens einer Werkstücköffnung (7) und einer flexiblen Dekorschicht, welche entlang der Werkstücköffnung (7) übersteht,
**dadurch gekennzeichnet,**
**dass** eine Vorrichtung (10) zum Umbugen nach einem der Ansprüche 1 bis 6 vorgesehen ist.

8. Verfahren zum Umbugen einer überstehenden flexiblen Dekorschicht an einem Werkstück (5), insbesondere mit einer Vorrichtung (10) nach einem der Ansprüche 1 bis 6, wobei das Werkstück (5) mit einer Halterung (14) aufgenommen und gehaltert wird und mittels mehrerer Umbugstempel (40) die überstehende Dekorschicht umgelegt und an das Werkstück (5) angelegt wird, wobei
- ein Werkstück (5) mit einer Werkstücköffnung (7) vorgesehen wird,
- das Werkstück (5) in einer Halterung (14) mit einem Durchgang (16) aufgenommen wird, welcher zu der Werkstücköffnung (7) korrespondierend angeordnet ist, und
- die Umbugstempel (40) im Bereich des Durchganges (16) angeordnet sind und zwischen einer Rückzugsposition, in welcher die Umbugstempel (40) radial innerhalb eines Umfanges der Werkstücköffnung (7) angeordnet sind, und einer Umbugposition verstellt werden, in welcher die Umbugstempel (40) radial über die Werkstücköffnung (7) hinausragen,
**dadurch gekennzeichnet,**
- **dass** zum Umbugen die Halterung (14) mit dem Werkstück (5) relativ zu einer Grundplatte (20) in einer Hubrichtung verfahren wird,
- **dass** auf der Grundplatte (20) die Umbugstempel (40) und zugeordnete Stellzylinder (50) angeordnet sind, wobei die Grundplatte (20) mit den Umbugstempeln (40) und den Stellzylindern (50) relativ zu der Halterung (14) in der Hubrichtung verfahren wird, und
- **dass** die Umbugstempel (40) durch die Stellzylinder (50) in die Umbugposition in einer seitlichen Stellbewegung verstellt werden, welche im Wesentlichen senkrecht zur Hubrichtung gerichtet ist.

9. Verfahren nach Anspruch 8,
**dadurch gekennzeichnet,**
**dass** die Umbugstempel (40) einzeln mittels Stellzylinder (50) verstellt werden, welche von einer Steuereinheit gesteuert werden.

10. Verfahren nach Anspruch 8 oder 9,
**dadurch gekennzeichnet,**
**dass** mindestens ein Umbugstempel (40) beheizt wird, wobei beim Umbugen die überstehende Dekorschicht an dem Werkstück (5) heiß verklebt oder angeschweißt wird.

11. Verfahren nach einem der Ansprüche 8 bis 10, **dadurch gekennzeichnet, dass** ein Verbindungsglied (56) zwischen dem Stellzylinder (50) und dem Umbugstempel (40) und/oder der Umbugstempel (40) mittels eines Kühlmediums gekühlt wird, welches durch Kühlkanäle in dem Verbindungsglied (54) und/oder dem Umbugstempel (40) geleitet wird.

## Claims

1. Device for edge-folding a protruding flexible decorative layer on a workpiece (5), having a holder (14) for receiving and holding the workpiece (5) and one or several edge-folding dies (40) for folding over the protruding decorative layer and placing it against the workpiece (5),
wherein the holder (14) for receiving and holding a workpiece (5) with a workpiece opening (7) has a passage (16) which is arranged correspondingly to the workpiece opening (7) of the received workpiece (5),
the edge-folding dies (40) are arranged in the region of the passage (16) and are adjustable between a retracted position, in which the edge-folding dies (40) are arranged radially within a circumference of the workpiece opening (7), and an edge-folding position, in which the edge-folding dies (40) project radially beyond the workpiece opening (7), and
one positioning cylinder (50) is in each case assigned to individual edge-folding dies (40) and the edge-folding dies (40) are individually adjustable,
**characterized in that**
for edge-folding the holder (14) with the workpiece (5) is movable relative to a base plate (20) in a lifting direction,
**in that** the positioning cylinders (50) are arranged with the edge-folding dies (40) on the base plate (20),
**in that** the base plate (20) with the positioning cylinders (50) and the edge-folding dies (40) is movable relative to the holder (14) in the lifting direction by means of a lifting cylinder arrangement (60), and
**in that** through the positioning cylinders (50) the edge-folding dies (40) are adjustable into the edge-folding position in a lateral positioning movement which is substantially directed perpendicularly to the lifting direction.

2. Device according to claim 1,
**characterized in that**
the edge-folding dies (40) are arranged along the circumference of the workpiece opening (7).

3. Device according to claim 1 or 2,
**characterized in that**
the positioning cylinders (50) are arranged below the holder (14), wherein the positioning cylinders (50) are connected to the assigned edge-folding dies (40) by a connecting member (54) in each case which extends upwards through the passage (16) in the holder (14).

4. Device according to any one of claims 1 to 3,
**characterized in that**
at least one edge-folding die (40) has a heating means, in particular an electric heating cartridge.

5. Device according to any one of claims 3 or 4,
**characterized in that**
between the edge-folding die (40) and the connecting member (54) an insulation element for thermal insulation is provided.

6. Device according to any one of claims 3 to 5,
**characterized in that**
the connecting member (54) and/or the edge-folding die (40) are provided with cooling ducts and
**in that** pressurized fluid flowing out of the positioning cylinder (50) can be conveyed through the cooling ducts as cooling medium.

7. Production facility having an injection molding device for back injection molding and producing a workpiece (5) with at least one workpiece opening (7) and a flexible decorative layer which protrudes along the workpiece opening (7),
**characterized in that**
a device (10) for edge-folding according to any one of claims 1 to 6 is provided.

8. Method for edge-folding a protruding flexible decorative layer on a workpiece (5), in particular with a device (10) according to any one of claims 1 to 6, wherein the workpiece (5) is received and held by a holder (14) and by means of several edge-folding dies (40) the protruding decorative layer is folded over and placed against the workpiece (5),
wherein
- a workpiece (5) with a workpiece opening (7) is provided,
- the workpiece (5) is received in a holder (14) with a passage (16) which is arranged correspondingly to the workpiece opening (7), and
- the edge-folding dies (40) are arranged in the region of the passage (16) and are adjusted between a retracted position, in which the edge-folding dies (40) are arranged radially within a circumference of the workpiece opening (7), and an edge-folding position, in which the edge-folding dies (40) project radially beyond the workpiece opening (7),
**characterized in that**
- for edge-folding the holder (14) with the workpiece (5) is moved relative to a base plate (20) in a lifting direction,
- **in that** on the base plate (20) the edge-folding dies (40) and assigned positioning cylinders (50) are arranged, wherein the base plate (20) with the edge-folding dies (40) and the positioning cylinders (50) is moved relative to the holder (14) in the lifting direction, and
- **in that** through the positioning cylinders (50) the edge-folding dies (40) are adjusted into the edge-folding position in a lateral positioning movement which is substantially directed perpendicularly to the lifting direction.

9. Method according to claim 8,
**characterized in that**
the edge-folding dies (40) are adjusted individually by means of positioning cylinders (50) which are controlled by a control unit.

10. Method according to claim 8 or 9,
**characterized in that**
at least one edge-folding die (40) is heated, wherein during edge-folding the protruding decorative layer is heat-bonded or welded onto the workpiece (5).

11. Method according to any one of claims 8 to 10,
**characterized in that**
a connecting member (54) between the positioning cylinder (50) and the edge-folding die (40) and/or the edge-folding die (40) is cooled by means of a cooling medium which is conveyed through cooling ducts in the connecting member (54) and/or the edge-folding die (40).

## Revendications

1. Dispositif servant à rabattre une couche décorative flexible qui déborde au niveau d'une pièce (5), avec un support (14) servant à recevoir et à maintenir la pièce (5) et une ou plusieurs matrices de rabattement (40) servant à replier la couche décorative qui déborde et à l'appliquer à la pièce (5),
dans lequel le support (14) servant à recevoir et à maintenir une pièce (5) avec une ouverture de pièce (7) présente un passage (16), qui est disposé de manière à correspondre à l'ouverture de pièce (7) de la pièce (5) reçue,
les matrices de rabattement (40) sont disposées dans la zone du passage (16) et peuvent être ajustées entre une position de retrait, dans laquelle les matrices de rabattement (40) sont disposées de manière radiale à l'intérieur d'une périphérie de l'ouverture de pièce (7), et une position de rabattement, dans laquelle les matrices de rabattement (40) dépassent de manière radiale de l'ouverture de pièce (7), et
respectivement un cylindre de réglage (50) est associé aux diverses matrices de rabattement et les matrices de rabattement (40) peuvent être ajustées de manière individuelle, **caractérisé en ce**
**qu'**aux fins du rabattement, le support (14) peut être déplacé dans une direction de levage avec la pièce (5) par rapport à une plaque de base (20),
**que** les cylindres de réglage (50) sont disposés avec les matrices de rabattement (40) sur la plaque de base (20),
**que** la plaque de base (20) peut être déplacée avec les cylindres de réglage (50) et les matrices de rabattement (40) dans la direction de levage par rapport au support (14) au moyen d'un ensemble de cylindres de levage (60), et
**que** les matrices de rabattement (40) peuvent être ajustées par les cylindres de réglage (50) dans la position de rabattement en un déplacement de réglage latéral, qui est dirigé sensiblement de manière perpendiculaire par rapport à la direction de levage.

2. Dispositif selon la revendication 1,
**caractérisé en ce**
**que** les matrices de rabattement (40) sont disposées le long de la périphérie de l'ouverture de pièce (7).

3. Dispositif selon la revendication 1 ou 2,
**caractérisé en ce**
**que** les cylindres de réglage (50) sont disposés sous le support (14), les cylindres de réglage (50) étant reliés aux matrices de rabattement (40) associées respectivement par l'intermédiaire d'un organe de liaison (54), lesquels organes de liaison s'étendent vers le haut à travers le passage (16) dans le support (14).

4. Dispositif selon l'une quelconque des revendications 1 à 3,
**caractérisé en ce**
**qu'**au moins une matrice de rabattement (40) présente un système de chauffage, en particulier une cartouche de chauffage électrique.

5. Dispositif selon l'une quelconque des revendications 3 ou 4,
**caractérisé en ce**
**qu'**est prévu entre la matrice de rabattement (40) et l'organe de liaison (54), un élément d'isolation servant à l'isolation thermique.

6. Dispositif selon l'une quelconque des revendications 3 à 5,
**caractérisé en ce**
**que** l'organe de liaison (54) et/ou la matrice de rabattement (40) sont pourvus de canaux de refroidissement, et
**qu'**un flux de fluide sous pression sortant du cylindre de réglage (50) peut être acheminé en tant que milieu de refroidissement à travers les canaux de refroidissement.

7. Installation de production avec un dispositif de coulée par injection servant à surmouler et à fabriquer une pièce (5) avec au moins une ouverture de pièce (7) et d'une couche décorative flexible, qui déborde le long de l'ouverture de pièce (7),
**caractérisée en ce**
**qu'**un dispositif (10) de rabattement selon l'une quelconque des revendications 1 à 6 est prévu.

8. Procédé servant à rabattre une couche décorative flexible qui déborde au niveau d'une pièce (5), en particulier avec un dispositif (10) selon l'une quelconque des revendications 1 à 6, dans lequel la pièce (5) est reçue et maintenue au moyen d'un support (14) et la couche décorative qui déborde est repliée et appliquée à la pièce (5) au moyen de plusieurs matrices de rabattement (40),
dans lequel
- une pièce (5) est prévue avec une ouverture de pièce (7),
- la pièce (5) est reçue dans un support (14) avec un passage (16), qui est disposé de manière à correspondre à l'ouverture de pièce (7), et
- les matrices de rabattement (40) sont disposées dans la zone du passage (16) et sont ajustées entre une position de retrait, dans laquelle les matrices de passage (40) sont disposées de manière radiale à l'intérieur de la périphérie de l'ouverture de pièce (7), et une position de rabattement, dans laquelle les matrices de rabattement (40) dépassent de manière radiale de l'ouverture de pièce (7),
**caractérisé en ce**
- **qu'**aux fins du rabattement, le support (14) est déplacé dans une direction de levage avec la pièce (5) par rapport à une plaque de base (20),
- **que** les matrices de rabattement (40) et des cylindres de réglage (50) associés sont disposés sur la plaque de base (20), dans lequel la plaque de base (20) est déplacée dans la direction de levage avec les matrices de rabattement (40) et les cylindres de réglage (50) par rapport au support (14), et
- **que** les matrices de rabattement (40) sont ajustées par les cylindres de réglage (50) dans la position de rabattement en un déplacement de réglage latéral, qui est dirigé sensiblement de manière perpendiculaire par rapport à la direction de levage.

9. Procédé selon la revendication 8,
**caractérisé en ce**
**que** les matrices de rabattement (40) sont ajustées de manière individuelle au moyen de cylindres de réglage (50), qui sont commandés par une unité de commande.

10. Procédé selon la revendication 8 ou 9,
**caractérisé en ce**
**qu'**au moins une matrice de rabattement (40) est chauffée, la couche décorative qui déborde étant collée ou soudée à chaud à la pièce (5) lors du rabattement.

11. Procédé selon l'une quelconque des revendications 8 à 10,
**caractérisé en ce**
**qu'**un organe de liaison (56) entre le cylindre de réglage (50) et la matrice de rabattement (40) et/ou les matrices de rabattement (40) est refroidi au moyen d'un milieu de refroidissement, qui est acheminé à travers des canaux de refroidissement dans l'organe de liaison (54) et/ou dans la matrice de rabattement (40).
